# EUROPÄISCHE PATENTSCHRIFT

(11) **EP 2 764 962 B1**
(45) Veröffentlichungstag und Bekanntmachung des Hinweises auf die Patenterteilung: **25.05.2016**
(21) Anmeldenummer: 14152554.3
(22) Anmeldetag: 24.01.2014
(51) Int. Cl.: B26D 3/08, B26D 7/26, B60R 21/2165

(54) **Vorrichtung zum Einbringen von Schnitten in eine flächige Materialbahn, sowie Verfahren zum Steuern einer Schneidvorrichtung**
Device for introducing cuts into a flat sheet of material, and method for controlling a cutting device
Dispositif permettant d'introduire des coupes dans une bande de matière plane et procédé de commande d'un dispositif de coupe

(30) Priorität: 08.02.2013 DE 102013202081
(43) Veröffentlichungstag der Anmeldung: 13.08.2014
(73) Patentinhaber: Magna Interiors GmbH, 94315 Straubing (DE)
(72) Erfinder: Peintinger, Alfred, 94360 Mitterfels (DE)
(74) Vertreter: Capitán García, Maria Nuria

(56) Entgegenhaltungen:
- EP-A1- 1 621 415
- US-A- 4 624 169
- US-A1- 2005 147 476

## Beschreibung

Die vorliegende Erfindung betrifft eine Vorrichtung zum Einbringen von Schnitten in eine flächige Materialbahn, sowie ein Verfahren zum Steuern einer Schneidvorrichtung zum Einbringen von Schnitten in flächige Materialbahnen.

Zur Steigerung der Sicherheit von Fahrzeuginsassen werden Airbagmodule mittlerweile im Kraftfahrzeuginnenraum an einer Vielzahl von Bereichen eingebaut. Bekannt ist die Anordnung von Airbagmodulen im Bereich der Instrumententafel, des Lenkrades, der Seitentüren, der Sitze, des Dachhimmels. Derartige Airbagmodule sind dabei im nicht aktivierten Zustand mittels einer Airbagabdeckung verschlossen. Damit das Airbagmodul für den Fahrzeuginsassen optisch nicht erkennbar ist, umfassen die Airbagabdeckungen eine Dekorschicht, die die Airbagdurchtrittsöffnung überspannt. Als Dekorschicht kommen dabei Formhäute, Folien und in höherwertigen Kraftfahrzeugen auch Leder zum Einsatz. Um die entsprechende Sicherheit bei einer Kollision gewährleisten zu können, muss die das Airbagmodul bzw. die Airbagdurchtrittsöffnung überspannende Folie bzw. die Lederschicht in diesem Bereich bei einem Auslösen und Entfalten des Airbagsackes definiert und schnell aufreißen. Hierzu ist es bekannt in die der Sichtseite abgewandten Oberfläche der Dekorschicht Sollschwächungen einzubringen.

Hierbei sind eine Vielzahl von Verfahren zum Einbringen derartiger Schwächungslinien bzw. Schnitte bekannt.

Aus der EP 1 459 943 A1 ist beispielsweise ein Verfahren zur Herstellung einer Material-Sollbruchstelle für die Freigabe von eingebauten Airbags bekannt. Hierbei wird mittels eines Schneidwerkzeugs eine Schwächungs- bzw. Sollbruchlinie in die Rückseite des Dekormaterials eingebracht. Zur Regelung der Restwandstärke des Dekormaterials wird beim Einbringen der Schnitte mittels eines Abstandssensors beim Schneiden sowohl der Abstand vom Sensor zur Schneidspitze, als auch der Abstand vom Sensor zur Schneidgegenplatte ermittelt. Die Differenz dieser beiden Werte wird dabei als Istwert ermittelt und mit einem Sollwert verglichen. Bei einer Abweichung wird das Schneidmesser zur Erzielung einer gleichbleibenden Restwandstärke in der Höhe d.h. Schnitttiefe geregelt. Bei diesem Verfahren wird nicht die Restwandstärke direkt, sondern indirekt über eine Messung des Abstandes zwischen Abstandssensor und Schneidgegenplatte ermittelt. Verschmutzungen der Auflagefläche der Schneidgegenplatte, Lufteinschlüsse zwischen Dekormaterial und Auflagefläche, Unregelmäßigkeiten der Oberfläche des Dekormaterials führen hierbei zu einer nicht konstanten Restwandstärke.

Weiterhin ist aus der US 4 624 169 A ein Verfahren zum Schneiden einer Abdeckschicht eines Werkstücks aus einem metallischen Material bekannt. Hierbei erfolgt eine Abstandsregelung einer Schneidklinge in Bezug auf das Werkstück über ein elektrisches Sensorsystem. Dieses umfasst eine Messeinrichtung zur Messung des ohmschen Widerstandes, wobei unter Anlegen einer Spannung an Schneidklinge und Werkstück ein Regelungssignal zur Beeinflussung der Einstellung der Schneidklinge erzeugt wird.

Aufgabe der vorliegenden Erfindung ist es daher unter einem ersten Aspekt, eine Vorrichtung zum Einbringen von Schnitten in eine flächige Materialbahn derart weiterzubilden, dass eine Materialbahn mit einem vordefinierten Schnitt hinsichtlich der verbleibenden Restwandstärke hergestellt werden kann und die Materialbahn auf der Dekorseite eine hochwertig anmutende Oberfläche aufweist. In einem weiteren Aspekt der Erfindung wird ein Verfahren zum Steuern eines Schneidgerätes zum Einbringen von Schnitten in flächige Materialbahnen bereitgestellt, welches eine exakt vordefinierte Restwandstärke über den Schnittverlauf sicherstellt, eine hochwertig Anmutung der Oberfläche erzielt und hinsichtlich der Verfahrenskosten günstig ausführbar ist.

Diese Aufgabe wird gemäß dem ersten Aspekt durch die im Anspruch 1 angegebenen Merkmale gelöst. Unter dem weiteren Aspekt wird die Aufgabe durch die im Anspruch 4 angegebenen Merkmal gelöst.

Die Restwandstärke ist hierbei die verbleibende, ungeschnittene Wandstärke der Materialbahn längs des Schnittverlaufs.

Durch das im Anspruch 4 angegebene Verfahren ist ein Einbringen von Schnitten in Materialbahnen möglich, bei dem eine exakt vordefinierte Restwandstärke erzielt werden kann. Dies ist dadurch möglich, da die Restwandstärke des Materials direkt ermittelt wird. Verschmutzungen der Auflagefläche, Schwankungen in der Materialdicke, Narboberfläche der Materialbahn, oder Lufteinschlüsse zwischen Auflagefläche und Dekorseite beeinflussen das Messergebnis hierbei nicht. Aufgrund der exakt einbringbaren Schnitte und vorgebbaren Restwandstärken erhält man eine hochwertig anmutende Oberfläche. Die Restwandstärken lassen sich in den vorgegebenen Toleranzgrenzen einstellen, wodurch ein "Abzeichnen" der Schnittverläufe auf der Dekorseite vermieden werden kann. Das exakte Ausbilden von Sollschwächungen mit definierten Restwandstärken steigert die Sicherheit bei dem Einsatz der bearbeiteten Materialbahnen als Airbagabdeckungen. Weiterhin entfällt eine aufwendige, nachgeschaltete materialzerstörende Prüfung die nur in Stichproben ausführbar ist.

Weitere vorteilhafte Ausgestaltungen und Weiterbildungen des erfindungsgemäßen Verfahrens ergeben sich aus den Unteransprüchen.

Eine bevorzugte Ausführungsform der erfindungsgemäßen Vorrichtung sowie des erfindungsgemäßen Verfahrens wird nachfolgend beispielshalber beschrieben, wobei veranschaulichend auf die beigefügten Zeichnungen Bezug genommen wird.

Es zeigen:
- Fig. 1: eine Schnittdarstellung der Schneidvorrichtung beim Einbringen eines Schnitts in eine Materialbahn, sowie eine schematische Darstellung des zugehörigen Messgeräts,
- Fig. 2: einen vergrößerten Ausschnitt eines Querschnitts einer Materialbahn mit eingebrachtem Schnitt.

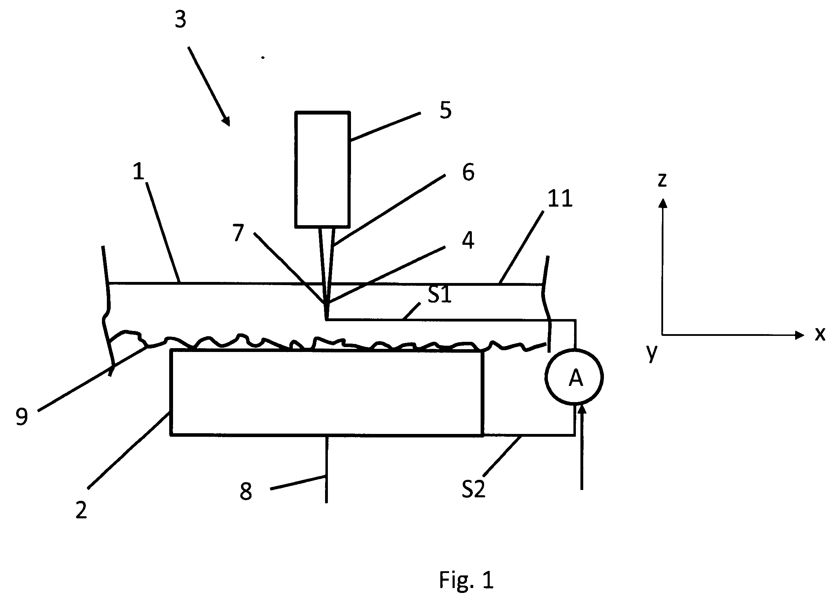

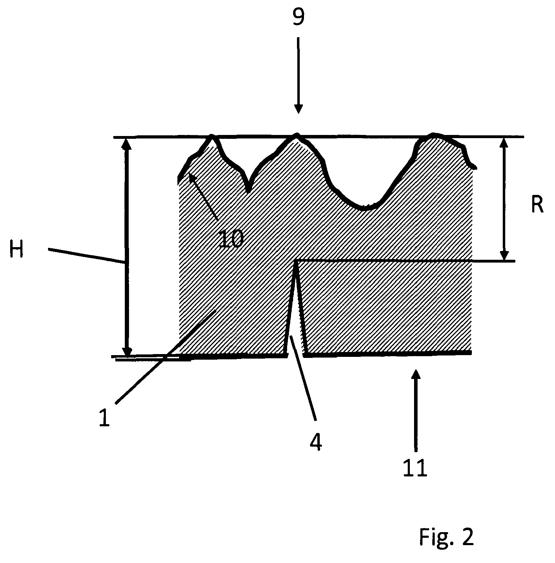

Figur 1 zeigt in einer schematischen Ansicht eine Vorrichtung zum Einbringen von Schnitten in Materialbahnen 1, wobei die Materialbahn 1 auf einer als Auflagefläche 2 ausgebildeten Schneidauflage aufgelegt ist und oberhalb der Materialbahn 1 eine Schneidvorrichtung 3 angeordnet ist. Zum Einbringen von Schnitten 4 in die Materialbahn 1 ist die Schneidvorrichtung 3 relativ zu der Auflagefläche 2 einstellbar ausgeführt. Hierbei ist die Schneidvorrichtung 3 sowohl hinsichtlich des relativen Abstandes zwischen Schneidvorrichtung 3 und Materialbahn 1 einstellbar ausgestaltet (z-Richtung), als auch in x und/oder z-Richtung verstellbar ausgeführt. Die Einstellung in z-Richtung ist wie nachfolgend beschrieben zur Erzielung einer vorbestimmten Restwandstärke R erforderlich. Die Definition der Restwandstärke R ist anhand der Fig. 2 näher beschrieben. Durch eine Einstellung der relativen Lage zwischen Schneidvorrichtung 3 und Auflagefläche 2 kann ein vorbestimmter Schnittverlauf erzielt werden. Das erfindungsgemäße Verfahren wird dabei insbesondere zur Herstellung von Airbagabdeckungen mit eingebrachten Airbagschnittverläufe / Sollschwächungen verwendet. Diese Sollschwächung ist auf der der Dekorseite gegenüberliegenden Seite eingebracht und ist häufig u-förmig oder in einem h-förmigen oder c-förmigen Verlauf ausgeführt.

Die Schneidvorrichtung 3 umfasst eine Aufnahme 5 für ein Schneidmesser 6, wobei das Schneidmesser 6 an seinem freien Endbereich eine spitz zulaufende Schneidklinge 7 aufweist. Mittels des Schneidmessers 6 können somit im Querschnitt dreieckige Schnitte in die Materialbahn 1 eingebracht werden. Es sind allerdings auch anders ausgestaltete Schneidklingen 7 einsetzbar. Das Schneidmesser 6 besteht aus einem elektrisch leitfähigen Material. Die Aufnahme 5 des Schneidmessers 6 ist als Messerhalter ausgeführt. Der Messerhalter weist dabei eine Isolation auf, so dass das Schneidmesser 6 elektrisch isoliert gegenüber dem Messerhalter 5 eingespannt gehalten ist.

Die unterhalb des Schneidmessers 6 angeordnete Auflagefläche 2 ist im Wesentlichen ein plattenförmiges Element mit einer ebenen Oberfläche. Die Auflagefläche 2 besteht ebenfalls aus einem elektrisch leitfähigen Material. Zur Ermittlung der Restwandstärke R wird zwischen dem Schneidmesser 6 und der Auflagefläche 2 eine Spannung angelegt. Hierzu ist eine Spannungsquelle vorgesehen, deren Anschlusspunkte S1/S2 mit der Schneidvorrichtung 3 und der Auflagefläche 2 verbunden sind. Die Auflagefläche 2 besitzt weiterhin einen Masseanschluss 8.

Vor dem Einbringen von Schnitten bzw. einer Sollschwächung nach einem vorgegebenen Schnittverlauf in die Materialbahn 1, wird in einem ersten Schritt eine Materialbahn 1 flächig auf die Auflagefläche 2 aufgelegt. Bei dem beschriebenen Ausführungsbeispiel ist die Materialbahn eine Lederhaut, die beispielsweise als Dekorhaut zum Weiterverarbeiten zu einem Haut-Schaum-Verbund für eine Instrumententafel verwendet wird. Die Dekorseite 9 der Lederhaut weist eine Narbung 10 auf, diese mit einer Narbung 10 ausgestaltete Oberfläche wird auf die Auflagefläche 2 aufgelegt. Die Unterseite 11 der Lederhaut, in die der Schnittverlauf eingebracht werden soll, weist nach oben. Die Lederhaut wird über geeignete Mittel auf der Auflagefläche 2 flächig festgehalten. Zum Einbringen von Schnitten wird nun das Schneidmesser 6 mittels einer mit der Schneidvorrichtung verbundenen Antriebseinheit nach unten verfahren, um in die Lederhaut einzudringen. Gleichzeitig wird das Schneidmesser 6 in x und/oder y Richtung verfahren. Hierdurch entsteht eine Sollschwächung, die nach einem vorbestimmbaren Verlauf erzeugt werden kann. In der Steuer/Regeleinrichtung sind entsprechende Steuersignale abgelegt, die an eine Antriebseinheit der Schneidvorrichtung 3 übermittelt werden, so dass der gewünschte Verlauf der Sollschwächung erzielt wird. Die Steuer/Regeleinrichtung ist in der Zeichnung nicht dargestellt.

Die zu ermittelnde und einzustellende Restwandstärke R wird nun während des Schneidvorgangs kontinuierlich gemessen und bei einer Abweichung der gemessenen Ist-Restwandstärke R im Vergleich zu der in der Steuer / Regeleinrichtung abgelegten Soll-Restwandstärke wird ein Steuer/Regelsignal als Stellsignal an die Antriebseinheit der Schneidvorrichtung 3 übermittelt. Das Stellsignal bewirkt dann ein Verfahren des Schneidmessers 7 in z- Richtung und entsprechender Einstellung der Schnitttiefe. Die Restwandstärke R wird bei dem Einbringen der Schnitte über die Messung des während des Schneidens fließenden elektrischen Stromes direkt über den spezifischen Widerstand des Materials bestimmt. Dies hat den Vorteil, dass eine Änderung des ermittelten spezifischen Widerstandes eine exakte Veränderung der Restwandstärke R abbildet. Der beim Schneiden über ein Messgerät gemessene elektrische Strom wird als Ist-Messwert an eine Steuer/Regeleinrichtung geleitet. Dort wird dann in Abhängigkeit des Materials und dessen spezifischen Widerstandes die Restwandstärke ermittelt. Bei einer Abweichung von der in der Steuer/Regeleinrichtung vorgegebenen Soll-Restwandstärke wird, wie zuvor schon erläutert, ein entsprechendes Steuer/Regelsignal als Stellsignal zur Einstellung bzw. Verstellung der Relativlage zwischen Schneidmesser 6 und Auflagefläche 2 vorzugsweise an die Schneidvorrichtung 3 zur Verstellung des Schneidmessers 6 in z-Richtung übermittelt.

Figur 2 zeigt in einer schematischen Darstellung einen Ausschnitt aus der Materialbahn 1, in die ein Schnitt mittels des Schneidmessers 6 eingebracht wurde. Die Materialbahn ist hierbei eine Lederhaut, die eine Dekorseite 9 und eine Unterseite 11 aufweist. Der Schnitt 4 ist hierbei ausgehend von der Unterseite 11 der Lederhaut eingebracht. Wie bereits eingangs beschrieben, sollen die eingebrachten Schnitte 4 bzw. Sollschwächungen von der Dekorseite 9 nicht sichtbar sein. Weiterhin ist aus der Figur ersichtlich, dass der Schnitt 4 im Querschnitt dreieckig ausgeführt ist, wobei der Schnitt 4 ausgehend von der Unterseite 11 zum Schnittgrund spitz zulaufend ausgeführt ist. Die Dekorseite 9 der Lederhaut weist eine Narbung 10 auf, die ein unebenes Oberflächenprofil darstellt. Aufgrund dieser Narbung ist die Hautdicke H nicht konstant, sondern schwankt um einige Zehntel Millimeter. Bei dem dargestellten Ausführungsbeispiel beträgt die Hautdicke H beispielsweise 1,4 mm mit einer Schwankung von +/- 0,2 mm. Die Hautdicke ist durch den Bemaßungspfeil H angezeigt. Des Weiteren ist in der Figur die Restwandstärke R eingezeichnet, die nach Einbringen des Schnitts 4 zwischen Schnittgrund und Dekoroberfläche 9 verbleibt. Die Restwandstärke R beträgt in dem gezeigten Ausführungsbeispiel 0,8 mm und darf hiervon um +/- 0.07 mm abweichen. Wie oben stehend beschrieben soll die Restwandstärke über den gesamten Schnittverlauf konstant sein.

## Patentansprüche

1. Vorrichtung zum Einbringen von Schnitten (4) in eine Airbagabdeckung für ein Kraftfahrzeug, wobei die Airbagabdeckung eine flächige Materialbahn (1) aus einer eine Dekorseite (9) und eine Unterseite (11) aufweisende Lederhaut ist, und wobei die Schnitte (4) in der Unterseite (11) eingebracht sind, umfassend eine Schneidvorrichtung (3) zum Einbringen von Schnitten in die Materialbahn (1) aus einer Lederhaut, eine Auflagefläche (2) für die flächige Auflage der Materialbahn (1), eine Messeinrichtung zur Ermittlung einer verbleibenden Restwandstärke (R) der beim Schneidvorgang verbleibenden Materialdicke der Materialbahn (1) längs des Schnittverlaufs, sowie einer Steuer-/Regeleinrichtung, die anhand der ermittelten Messwerte in Abhängigkeit von vorgegebenen Sollwerten entsprechende Stellsignale liefert, die an eine Antriebseinheit übermittelt werden, die anhand der Stellsignale eine Verstellung der Relativlage der Schneidvorrichtung (3) zu der Auflagefläche (2) bewirkt, **dadurch gekennzeichnet, dass** die Schneidvorrichtung (3) und die Auflagefläche (2) aus einem elektrisch leitenden Material bestehen, dass weiterhin eine Spannungsquelle vorgesehen ist, und deren Anschlusspunkte mit der Schneidvorrichtung (3) und der Auflagefläche (2) verbunden sind, und dass die Messeinrichtung eine Strommesseinrichtung ist, die den zwischen Schneidvorrichtung (3), Materialbahn (1) aus einer Lederhaut und Auflagefläche (2) beim Schneiden fließenden elektrischen Strom misst, und dass die Stellsignale anhand dieser Messwerte und dem der Materialbahn (1) aus einer Lederhaut zugehörigen spezifischen Widerstandes ermittelt werden.

2. Vorrichtung zum Einbringen von Schnitten (4) in eine flächige Materialbahn (2) nach Anspruch 1, wobei die Schneidvorrichtung (3) ein Schneidmesser (6) umfasst, dessen Schneidklinge (7) spitz zulaufend ausgebildet ist, um einen Schnitt (4) mit im Querschnitt einem spitz sich verjüngenden Querschnittsprofil zu bilden.

3. Vorrichtung zum Einbringen von Schnitten (4) in eine flächige Materialbahn (2) nach einem der vorangehenden Ansprüche, wobei die Schnitte (4) lineare Schnittlinien sind.

4. Verfahren zum Steuern einer Schneidvorrichtung (3) zum Einbringen von Schnitten (4) in eine Airbagabdeckung für ein Kraftfahrzeug, wobei die Airbagabdeckung eine flächige Materialbahn (1) aus einer eine Dekorseite (9) und eine Unterseite (11) aufweisende Lederhaut ist, und wobei die Schnitte (4) in der Unterseite (11) mittels einer Vorrichtung nach einem der vorangehenden Ansprüche eingebracht werden, mit den Schritten:
- Flächiges Auflegen der Materialbahn (1) aus einer Lederhaut auf eine Auflagefläche (2),
- Verwenden eines Schneidmessers (6) mit einer zum vorgegebenen Schnittquerschnitt passenden Form, und
- Verstellen der Relativlage zwischen Schneidmesser (6) und Auflagefläche (2) derart, dass durch die Einstellung der Lage ein Schnitt mit vorgegebener Restwandstärke (R) in die Materialbahn (1) aus einer Lederhaut eingebracht wird,
- Erfassen der Restwandstärke (R) beim Schneidvorgang als Ist-Signal,
- Ermitteln eines Steuer / Regelsignals als Stellsignal und Verändern der Relativlage zwischen Materialbahn (1) aus einer Lederhaut und Auflagefläche (2) falls das ermittelte Ist-Signal von einem vorgegebenen Sollsignal abweicht, **dadurch gekennzeichnet, dass** das Ist-Signal durch ein Messen eines fließenden elektrischen Stromes zwischen Schneidmesser (6), Materialbahn (1) aus einer Lederhaut und Auflagefläche (2) und einem in der Steuer-/Regeleinrichtung hinterlegtem der Materialbahn (1) aus einer Lederhaut zugeordneten spezifischen Widerstand ermittelt wird.

5. Verfahren zum Steuern einer Schneidvorrichtung nach Anspruch 4, wobei der Schnitt (4) eine Sollschwächung in einer Materialbahn (1) aus einer Lederhaut für eine Airbagabdeckung eines Kraftfahrzeugs ist.

6. Verfahren zum Steuern bzw. Regeln einer Schneidvorrichtung (3) zum Einbringen von Schnitten (4) in eine flächige Materialbahn (1) aus einer Lederhaut nach Anspruch 4, wobei die Schnitte (4) Sollbruchlinien für Airbagabdeckungen sind.

7. Verfahren zum Steuern bzw. Regeln einer Schneidvorrichtung (3) zum Einbringen von Schnitten (4) in eine flächige Materialbahn (1) aus einer Lederhaut nach einem der vorangehenden Ansprüche 6, wobei die Relativlage der Schneidvorrichtung (3) zur Auflagefläche (2) derart verstellt wird, dass die Restwandstärke längs des Schnittsverlaufs konstant ist.

## Claims

1. A device for inserting cuts (4) into an airbag cover for a motor vehicle, wherein the airbag cover is a flat sheet of material (1) from a leather skin having a decorated side (9) and a lower side (11), and wherein the cuts (4) are inserted in the lower side (11), comprising a cutting device (3) for inserting cuts into the sheet of material (1) from a leather skin, a support surface (2) for a flat support of the sheet of material (1, a measuring device for determining a remanent residual wall thickness (R) of the thickness of the sheet of material (1) remaining during the cutting process, along the course of the cut, and a control/regulating device which supplies corresponding corrective signals on the basis of the determined measured values as a function of predetermined setpoints, which signals are transmitted to a drive unit which effects an adjustment of the relative position of the cutting device (3) to the support surface (2) on the basis of the control signals, **characterised in that** the cutting device (3) and the support surface (2) consist of an electrically conducting material, **in that** furthermore a voltage source is provided, and whose connection points are connected to the cutting device (3) and the contract surface (2), **in that** the measuring device is a current measuring device which measures the electric current flowing between the cutting device (3), the sheet of material (1) from a leather skin and support surface (2) during cutting, and **in that** the corrective signals are determined on the basis of these measured values and the specific resistance associated with that of the sheet of material (1) from a leather skin.

2. The device for inserting cuts (4) into a flat sheet of material (2) according to Claim 1, wherein the cutting device (3) comprises a cutting knife (6) whose cutting blade (7) has a tapered design in order to form a cut (4) with a cross-sectional profile that is tapering in cross-section.

3. The device for inserting cuts (4) into a flat sheet of material (2) according to any one of the preceding claims, wherein the cuts (4) are linear cutting lines.

4. A method for controlling a cutting device (3) for inserting cuts (4) into an airbag cover for a motor vehicle, wherein the airbag cover is a flat sheet of material (1) from a leather skin having a decorated side (9) and a lower side (11), and wherein the cuts (4) are inserted in the lower side (11) by means of a device according to any one of the preceding claims, with the steps:
- Flat depositing of the sheet of material (1) from a leather skin on a contact surface (2),
- Use of a cutting knife (6) with a form suitable for the predetermined cutting cross-section, and
- Adjustment of the relative position between the cutting knife (6) and the contact surface (2) so that a cut with a predetermined residual wall thickness (R) is inserted into the sheet of material (1) from a leather skin by adjusting the position,
- Recording of the residual wall thickness (R) during the cutting process as an actual signal,
- Determination of a control / regulating signal as a corrective signal and changing of the relative position between the sheet of material (1) from a leather skin and contact surface (2) if the determined actual signal deviates from the theoretical setpoint, **characterised in that** the actual signal is determined by measuring an electric current flowing between the cutting knife (6), sheet of material (1) from a leather skin and the contact surface (2) and a specific resistance assigned to the sheet of material (1) from a leather skin stored in the control/regulating device.

5. The method for controlling a cutting device according to Claim 4, wherein the cut (4) is a theoretical weakening in a sheet of material (1) from a leather skin for an airbag cover of a motor vehicle.

6. The method for controlling or regulating a cutting device (3) for inserting cuts (4) into a flat sheet of material (1) from a leather skin according to Claim 4, wherein the cuts (4) are theoretical parting lines for airbag covers.

7. The method for controlling or regulating a cutting device (3) for inserting cuts (4) into a flat sheet of material (1) from a leather skin according to any one of the preceding claims 4-6, wherein the relative position of the cutting device (3) to the support surface (2) is adjusted so that the residual wall thickness is constant along the course of the cut.

## Revendications

1. Dispositif pour l'introduction de découpes (4) dans un couvercle de coussin de sécurité gonflable pour un véhicule à moteur, dans lequel le couvercle de coussin de sécurité gonflable est une bande de matériau (1) plane en cuir présentant un côté décoratif (9) et un côté inférieur (11) et dans lequel les découpes (4) sont réalisées dans le côté inférieur (11), comprenant un dispositif de coupe (3) destiné à introduire des découpes dans la bande de matériau (1) en cuir, une surface d'appui (2) pour l'appui plan de la bande de matériau (1), un dispositif de mesure destiné à détecter une épaisseur de paroi résiduelle (R) de l'épaisseur de matériau restant lors du processus de coupe de la bande de matériau (1) le long de la ligne de coupe, ainsi qu'un dispositif de commande/régulation, qui, au moyen de la valeur de mesure détectée en fonction de valeurs de consigne prédéfinies, fournit des signaux de réglage, qui sont transmis à une unité d'entraînement qui, à l'aide des signaux de réglage, entraîne une modification de réglage de la position relative du dispositif de coupe (3) par rapport à la surface d'appui (2), **caractérisé en ce que** le dispositif de coupe (3) et la surface d'appui (2) sont composés d'un matériau électriquement conducteur, **en ce qu'**une source de tension est en outre prévue et dont les points de raccordement sont reliés au dispositif de coupe (3) et à la surface d'appui (2) et **en ce que** le dispositif de mesure est un dispositif de mesure du courant, qui mesure le courant électrique circulant lors de la coupe entre le dispositif de coupe (3), la bande de matériau (1) en cuir et la surface d'appui (2) et **en ce que** les signaux de réglage sont déterminés à l'aide de ces valeurs de mesure et de la résistance spécifique appartenant à la bande de matériau (1) en cuir.

2. Dispositif pour l'introduction de découpes (4) dans une bande de matériau (2) plane selon la revendication 1, dans lequel le dispositif de coupe (3) comprend un couteau de coupe (6), dont la lame de coupe (7) est formée de façon à se terminer en pointe, afin de former une découpe (4) avec, en section transversale, un profil transversal se rétrécissant vers la pointe.

3. Dispositif pour l'introduction de découpes (4) dans une bande de matériau (2) plane selon l'une quelconque des revendications précédentes, dans lequel les découpes (4) sont des lignes de découpe linéaires.

4. Procédé de commande d'un dispositif de coupe (3) pour l'introduction de découpes (4) dans un couvercle de coussin de sécurité gonflable pour un véhicule à moteur, dans lequel le couvercle du coussin de sécurité gonflable est une bande de matériau (1) plane composée d'un cuir présentant un côté décoratif (9) et un côté inférieur (11) et dans lequel les découpes (4) sont appliquées dans le côté inférieur (11) au moyen d'un dispositif selon l'une quelconque des revendications précédentes, comprenant les étapes suivantes :
- appui plan de la bande de matériau (1) en cuir sur une surface d'appui (2),
- utilisation d'un couteau de coupe (6) avec une forme adaptée à une section transversale de coupe prédéfinie et
- modification du réglage de la position relative entre le couteau de coupe (6) et la surface d'appui (2) de sorte qu'une découpe avec une épaisseur de paroi résiduelle (R) dans la bande de matériau (1) en cuir soit appliquée grâce au réglage de la position,
- saisie de l'épaisseur de paroi résiduelle (R) lors du processus de coupe sous forme de signal réel,
- détermination d'un signal de commande/régulation en guise de signal de réglage et modification de la position relative entre la bande de matériau (1) en cuir et la surface d'appui (2) au cas où le signal réel déterminé soit différent d'un signal de consigne prédéfini, **caractérisé en ce que** le signal réel est déterminé par une mesure d'un courant électrique circulant entre le couteau de coupe (6), la bande de matériau (1) en cuir et la surface d'appui (2) et une résistance spécifique enregistrée dans le dispositif de commande/régulation affectée à la bande de matériau (1) en cuir.

5. Procédé de commande d'un dispositif de coupe selon la revendication 4, dans lequel la découpe (4) est un affaiblissement théorique dans une bande de matériau (1) en cuir, pour un couvercle de coussin de sécurité gonflable d'un véhicule à moteur.

6. Procédé de commande ou de régulation d'un dispositif de coupe (3) pour l'introduction de découpes (4) dans une bande de matériau (1) plane en cuir selon la revendication 4, dans lequel les découpes (4) sont des lignes de rupture théoriques pour des couvercles de coussin de sécurité gonflable.

7. Procédé de commande ou de régulation d'un dispositif de coupe (3) pour l'introduction de découpes (4) dans une bande de matériau (1) plane en cuir selon l'une quelconque des revendications précédentes 6, dans lequel la position relative du dispositif de coupe (3) par rapport à la surface d'appui (2) est modifiée de telle sorte que la résistance de paroi résiduelle le long de la ligne de coupe soit constante.
